# EUROPEAN PATENT APPLICATION

(11) **EP 1 134 266 A1**
(43) Date of publication of application: **19.09.2001**
(21) Application number: 00200876.1
(22) Date of filing: 13.03.2000
(51) Int. Cl.: C09D 167/02, C09D 7/12, C09D 5/03

(54) **Powder paint composition**

(71) Applicant: DSM N.V., 6411 TE Heerlen (NL)
(72) Inventor: Grisnich, Willem, 8131 PD Wijhe (NL); Van Benthem, Rudolfus Antonius Theodorus Maria, 6141 BR Sittard (NL); Gijsman, Pieter, 6191 NM Beek (NL)

(57) **Abstract**

The invention relates to a powder paint binder composition which contains a compound comprising carboxylic acid units, a compound comprising hydroxyalkyl amide units, an aromatic amine and a phosphite. Preferably the amine is 4,4-di-cumyl-diphenyl-amine. The compound comprising carboxylic acid units may be a polyester and the compound comprising hydroxyalkyl amide units may be a condensation polymer having a number average molecular mass of between 600 and 10000 and a hydroxyalkylamide functionality of between 2 and 250.

## Description

The invention relates to a powder paint binder composition which contains a compound comprising hydroxyalkyl amide units.The invention also relates to the powder paint composition comprising this binder and to the powder coating obtained after curing of the powder paint composition.

WO 99/16810 discloses a powder paint composition comprising a condensation polymer containing ester groups, at least one amide group in the backbone and having at least one hydroxyalkylamide endgroup. The heat stability after curing in an electric oven has to be improved.

The object of the invention is to provide a powder paint composition resulting in an improved combination of the characteristics colour and heat stability.

The powder paint binder composition according to the invention contains a compound comprising carboxylic acid units,a compound comprising hydroxyalkyl amide units and also an aromatic amine and a phosphite.

The powder paint composition according to the invention results after curing in a powder coating having a good combination of colour and heat stability properties. Furthermore other desirable properties such as for example impact resistance, flow and chemical resistance are obtained.

Suitable aromatic amines include for example 4,4-di-cumyl-di-phenyl-amine, N,N-diphenyl-p-phenylenediamine, 2,2,4,-trimethyl-1,2-dihydroquinone polymer,4,4-dioctyl-diphenylamine, 1,4-benzene diamine, the reaction product of diphenyl amine and acetone, p-isopropylamino diphenylamine, N,1,3-dimethyl-butyl-N-phenyl-paraphenylene-diamine, N,N-di-(1,4 dimethylpentyl)-paraphenylene-diamine, mixture of styrenated diphenylamines, 2-naphaleneamine, 1,4-benzenediamine,phenyl-naftylamine, benzeneamine, octylated diphenyl amine, styrenated diphenylamine and/or p-(p-toluene-sulfonylamido)-diphenylamine.

Preferably the amine is 4,4-di-cumyldiphenylamine.

Suitable phosphites include for example monophosphites, diphosphites and polyphosphites.

Suitable monophosphites include for example trisnonylphenyl phosphite, trilauryl phosphite, tris (2,4-di-t-butylphenyl) phosphite, diisooctylphosphite, triisodecyl phosphite, diisodecylphenylphosphite, diphenyl isodecyl phosphite, triphenyl phosphite, tris(tridecyl)phosphite, diphenyl isooctyl phosphite, 12H-dibenzo [d,g][1,3,2] dioxaphosphocin, 2,4,8,10-tetrakis(1,1-dimethylethyl)-6-(octyloxy)-, 2,2'-ethylidenebis (4,6-di-t-butylphenyl) fluorophosphonite, di-sodium-hydrogenphosphite, phosphorous acid, bis[2,4-bis(1,1-dimethylethyl)-6-methylphenyl]ethyl ester, 2,4,6 Tri-t-butylphenyl-2-butyl-2-ethyl-1,3-propane-diol-phosphite, triisooctyl phosphite, tris (dipropyleneglycol) phosphite, diisooctyl octylphenyl phosphite, tris-(2,4-di-tert.butyl-5-methylphenyl)-phosphite, diphenylphosphite, phenylneopentyleneglycolphosphite, phosphorous acid and trioctadecyl ester.

Suitable diphosphites include for example 2,4,8,10-tetraoxa-3,9-diphosphaspiro[5.5] undecane, 3,9-bis(octadecyloxy)- 3,9-, tetrakis-(2,4-di-tert-butyl-phenyl)-4,4'-bi-phenylene-di-phosphonite, bis (2,4-di-t-butylphenyl) pentaerythritol diphosphite, bis-(2,6-di-tbutyl-4-methyl-phenyl)-pentaerythritol-di-phosphite, bis-(2,4,6-tri-tbutyl-phenyl)-pentaerytritol-di-phosphite, poly 4,4' isopropylidene diphenol C₁₂₋₁₅ alcohol phosphite, tetrakis isodecyl 4,4'-isopropylidene diphosphite, bis-(2,4-dicumylphenyl)-pentaerytritol-diphosphite, phosphorous acid, (1-methylethylidene)di-4,1-phenylenetetraoctadecyl ester, phosphorous acid, oxybis (methyl-2,1 ethane diyl) tetraphenyl ester, 2,4,8,10-Tetraoxa-3,9-diphosphaspiro[5.5]undecane,3,9-bis(nonylphenoxy)-, and diisodecyl pentaerythritol diphosphite,.

Suitable polyphosphites include for example poly(dipropyleneglycol) phenylphosphite, 2,2',2"-nitrilo triethyl-tris[3,3',5,5'-tetratert-butyl-1,1'-biphenyl-2,2'-diyl]phosphite and 3,6,8,11,14,16,19,22,24,27-decaoxa-7,15,23-triphosphanonacosane-1,29-diol.

The aromatic amine and the phosphite may be added to the polymer, to the binder composition consisting of the polymer and the crosslinker and/or to the paint composition.

The thermosetting powder paint binder composition may contain more than 50% by weight of the compound comprising carboxylic acid units being preferably a polymer and less than 50% by weight of the hydroxylalkylamide groups containing crosslinker.

The polymer is preferably a polymer containing carboxyl groups or containing anhydride groups. Suitable polymers include for example a polyester, a polyacrylate, a polyether (such for example a polyether based on bisphenol or a phenol-aldehyde novolak), a polyurethane, a polycarbonate, a trifluoroethylene copolymer or a pentafluoropropylene copolymer, a polybutadiene, a polystyrene or a styrene maleic anhydride copolymer.

Preferably the polymer is a polyester.

According to a preferred embodiment of the invention the amine and phosphite are added to the polymer preferably the polyester.

Polyesters are generally based on the residues of aliphatic polyalcohols and polycarboxylic acids.

The polyester may comprise units of for example isophtalic acid, terephthalic acid, 2,6-naphthalene dicarboxylic acid and 4,4-oxybisbenzoic acid.

Other suitable aromatic cycloaliphatic and/or acyclic polycarboxylic acids useful herein include, for example, 3,6-dichloro phthalic acid, tetrachloro phthalic acid, tetrahydro phthalic acid, hexahydro terephthalic acid, hexachloro endomethylene tetrahydro phthalic acid, phthalic acid, azelaic acid, sebacic acid, decane dicarboxylic acid, adipic acid, succinic acid and maleic acid. These other carboxylic acids can be used in amounts of up to for example 25 mol% of the total amount of carboxylic acids. These acids may be used as such, or, in so far as available at their anhydrides, acid chlorides or lower alkyl esters.Small amounts of trifunctional acids for example trimelittic acid may be applied to obtain branched polyesters.

Hydroxy carboxylic acids and/or optionally lactones can also be used, such as, for example, 12-hydroxy stearic acid, hydroxy pivalic acid and ε-caprolactone. Monocarboxylic acids, such as, for example, benzoic acid, tert.-butyl benzoic acid, hexahydro benzoic acid and saturated aliphatic monocarboxylic acids, may, if desired, be used in minor amounts.

Useful polyalcohols, in particular diols, reactable with the carboxylic acids to obtain the polyester include aliphatic diols such as, for example, ethylene glycol, propane-1,2-diol, propane-1,3-diol, butane-1,2-diol, butane-1,4-diol, butane-1,3-diol, 2,2-dimethylpropanediol-1,3 (= neopentyl glycol), hexane-2,5-diol, hexane-1,6-diol, 2,2-bis-(4-hydroxy-cyclohexyl)-propane (hydrogenated bisphenol-A), 1,4-dimethylolcyclohexane, diethylene glycol, dipropylene glycol, 2,2-bis[4-(2-hydroxy ethoxy)-phenyl] propane, the hydroxy pivalic ester of neopentyl glycol, butyethylpropane diol and ethylmethylpropane diol.

Small amounts, such as less than for example about 20 wt.% and preferably less than 15 wt.%, of trifunctional alcohols may be used in order to obtain branched polyesters. Examples of suitable polyols include glycerol, hexanetriol, trimethylol ethane, trimethylol propane and tris- (2-hydroxyethyl)-isocyanurate. Examples of suitable polyfunctional alcohols and acids are sorbitol, pentaerithritol and pyromellitic acid.

The polyester may be prepared according to conventional procedures by esterification or transesterification, optionally in the presence of customary esterification catalysts such as, for instance, dibutyltin oxide or tetrabutyl titanate. Preparation conditions and the COOH/OH ratio can be selected so as to obtain end products that have an acid number and/or a hydroxyl number within the targeted range of values.

Generally, the polymer has an acid value between 20 and 120 mg KOH/gram resin and more preferably between 20 and 80 mg KOH/gram resin.

The molecular weight (Mn) of the polymer may be for example between 2000 and 6000.

The polymer may have a viscosity at 158°C that is lower than 150 Pas.The Tg of the polymer may range between 20°C and 80°C.

The quantity of the stabilisers may range between 0.1 and 3 wt.% (relative to the binder composition) and is preferably between 0.5 and 2 wt.%.

The weight ratio between the carboxylic acid compound and the hydroxyalkyl amide compound may range between 70 : 30 and 97 : 3, and is preferably between 80 : 20 and 95 : 5. The selection of this ratio may be governed by the envisaged application.

Examples of suitable compounds containing hydroxyalkyl amide units, which may be applied as the crosslinker, are compounds having a structure formula according to formula (I): 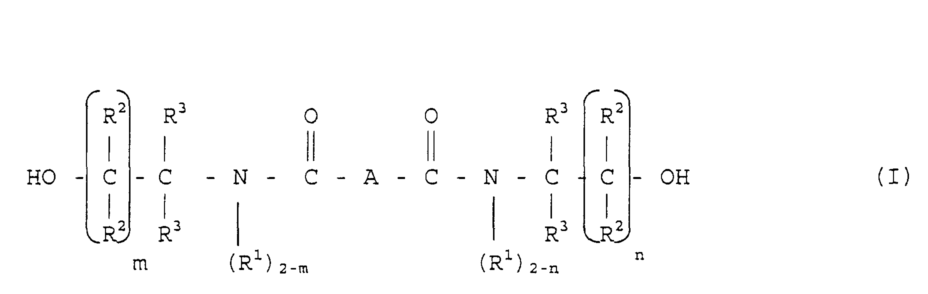 where:
- A is a mono- or polyvalent organic group, derived from a saturated or non-saturated alkyl group having 1-60 carbon atoms (for instance ethyl, methyl, propyl, butyl, pentyl, hexyl, heptyl, octyl, nonyl, decyl, eicosyl, triacontyl, tetracontyl, pentacontyl, hexacontyl and the like); an aryl group, such as phenyl, naphthyl and the like; a trialkylene amino group, with 1-4 carbon atoms per alkylene group, for instance trimethylene amino, triethylene amino and the like; or an unsaturated residue with one or more alkenic groups (-C=C-) with (1-4) carbon atoms, such as for instance ethenyl, 1-methylethenyl, 3-butenyl-1,3-diyl, 2-propenyl-1,2-diyl, a carboxyalkenyl group, for instance a 3-carboxy 2-propenyl group and the like, an alkoxycarbonylalkenyl group with (1-4) carbon atoms, such as for instance a 3-methoxycarbonyl-2- propenyl group and the like;
- R¹ is hydrogen, an alkyl group with 1-5 carbon atoms (for instance methyl, ethyl, n-propyl, n-butyl, sec. butyl, tert. butyl, pentyl and the like) or a hydroxyalkyl group with 1-5 carbon atoms (for instance 3-hydroxypropyl, 4-hydroxybutyl, 3-hydroxybutyl or de hydroxy derivatives of the pentyl isomers) ;
- R² and R³ are identical or different and each represent hydrogen or a straight or branched alkyl group with 1-5 carbon atoms, while one of the groups R² and one of the groups R³ together with the adjacent carbon atoms can also form a cycloalkyl group, such as for instance cyclopentyl and cyclohexyl; R² and R³ can also be hydroxyalkyl groups, such as for instance hydroxy(C₁-C₅)alkyl groups, preference being given to hydroxymethyl and 1-hydroxyethyl, and
- n and m independently of each other have a value of between 0 and 2.

Preferably, A = (C₁-C₁₀)alkyl or hydrogen, R¹ = hydrogen and R² and R³ = hydrogen or
hydroxy (C₁-C₂) alkyl.

Preferred embodiments of the compound according to formula (I) are compounds according to formulas (II) and (III): 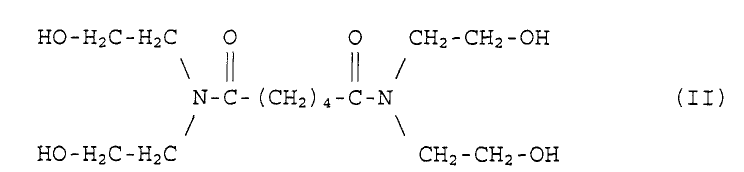 and

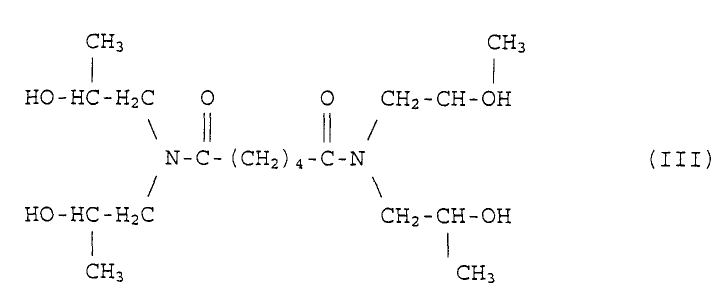

A suitable compound according to formula (II) is commercially available as Primid XL552™ and a suitable compound according to formula (III) is commercially available as Primid QM1260™.

It is also possible to use as the compound containing hydroxyalkyl amide groups a condensation polymer as disclosed in for example WO-A-99/16810. This polymer may contain hydroxyalkyl amide groups having a weight average molecular mass of between 800 and 50000 g/mol, a number average molecular mass of between 600 and 10000 and a hydroxyalkylamide functionality of between 2 and 250.

This polymer may contain at least a group according to formula (IV) : 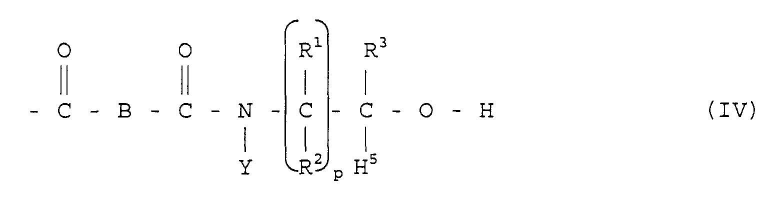 where 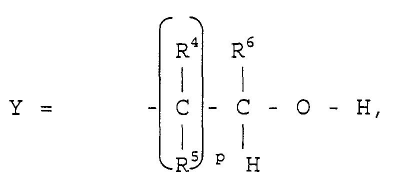 H, (C₁-C₂₀) (cyclo) alkyl,
or (C₆-C₁₀) aryl,
B = (C₂-C₂₀), optionally substituted, aryl or (cyclo)alkyl aliphatic diradical,
R¹, R², R³, R⁴, R⁵ and R⁶ are identical or different, and independently of each other can be H, (C₆-C₁₀) aryl- or (C₁-C₈)(cyclo)alkyl radicals and
p = 1-4.

Preferably p=1.

The polymer containing β-hydroxyalkyl amide groups, which may be applied as the crosslinker, may be a polymer according to formula (V): 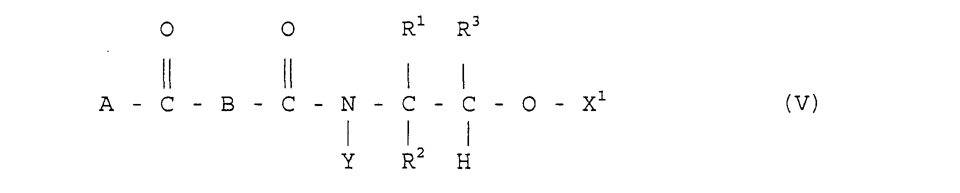 where: 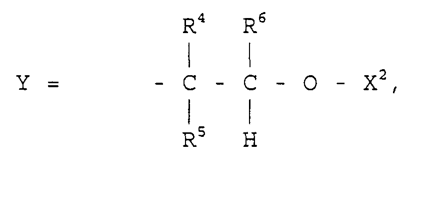 H, (C₁-C₂₀) (cyclo) alkyl or
(C₆-C₁₀)aryl
B = (C₂-C₂₀), optionally substituted, aryl or (cyclo)alkyl aliphatic diradical, 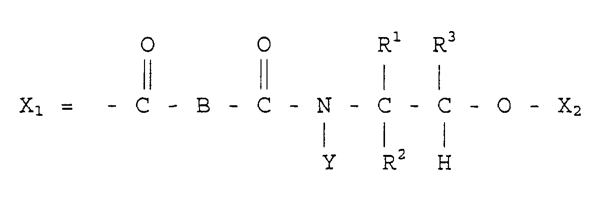 X₂ = H or X¹ and
R¹, R², R³, R⁴, R⁵ and R⁶ are identical or different, and independently of each other can be H, (C₆-C₁₀) aryl or (C₁-C₈) (cyclo)alkyl radicals or CH₂-OX².

In all formulas, R groups together or with adjacent carbon atoms can form part of a cycloalkyl group or a cycloaryl group.

In a preferred embodiment the polymer containing β-hydroxyalkyl amide groups is a polymer according to formula (VI): 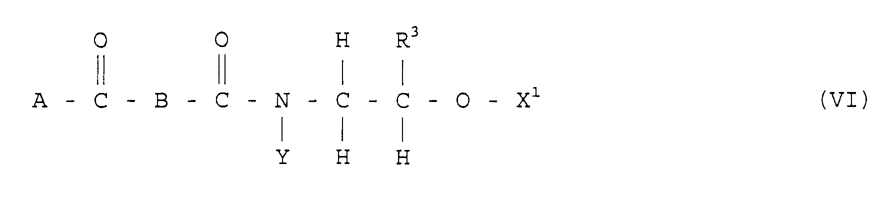 where: 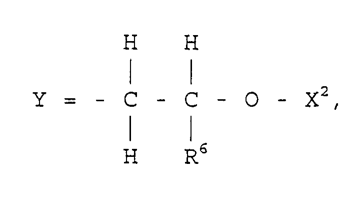 H, (C₁-C₂₀)(cyclo)alkyl or
(C₆-C₁₀)aryl, 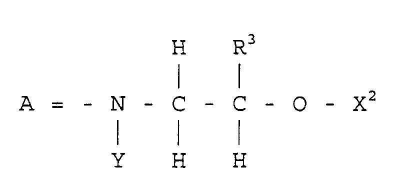 or OH,
B = (C₂-C₂₀), optionally substituted, an aryl or (cyclo)alkyl aliphatic diradical, 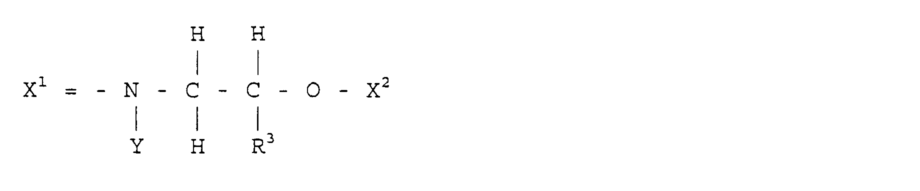 X² = H or X¹,
R³ = H or (C₆-C₁₀) aryl or (C₁-C₈)alkyl radical and
R⁶ = H or (C₆-C₁₀) aryl or (C₁-C₈)alkyl radical.

Copolymers that are hydroxylamide functional as well as carboxyl or anhydride functional can also be used, as can self-curing polymers.

Monomers, oligomers and polymers are suitable for use as compounds containing carboxylic acid groups.

Examples of suitable monomers are (C₁-C₂₆) alkyl carboxylates, (C₆-C₂₀)aryl carboxylates and unsaturated carboxylic acids, such as for instance (meth)acrylic acid, crotonic acid, semi-esters of itaconic acid, maleic acid and fumaric acid.

Examples of suitable polymers include polyesters, polystyrenes, polyacrylates and polyurethanes containing carboxyl groups.By preference, polyesters are used.

It is also possible to apply a condensation polymer having at least one carboxylic acid endgroup connected to an alkylamide group via an ester linkage.

This polymer may contain at least two groups according to formula (VII) 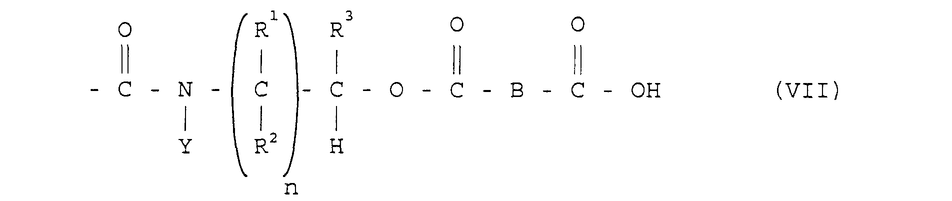 in which 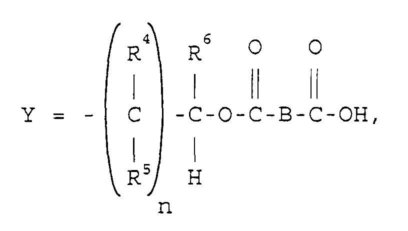 H, (C₁-C₂₀)(cyclo)alkyl,
or (C₆-C₁₀) aryl,
B = (C₂-C₂₄), optionally substituted, aryl or (cyclo)alkyl aliphatic diradical,
R¹, R², R³, R⁴, R⁵ and R⁶ may, independently of one another, be the same or different, H, (C₆-C₁₀) aryl or (C₁-C₈)(cyclo)alkyl radical and
n = 1-4.

It is also possible to use a compound comprising hydroxyl amide groups obtained by a process in which in a first step a compound comprising hydroxyalkyl amide units and carboxylic acid units is obtained by reacting a cyclic anhydride and an alkanolamine in a mixing device and that in a second step the binder composition is obtained by mixing said compound and a polymer in a second mixing device.The compound comprising hydroxyalkyl amide units and carboxylic acid units has a weight average molecular weight less than 800.

The preparation of thermosetting powder coatings in general and the chemical curing reactions of powder paints to cured coatings are described by Misev in Powder Coatings, Chemistry and Technology (1991, John Wiley) on pp. 42-54, pp. 148 and 224-226. A thermosetting binder composition is usually defined as the resinous part of the powder paint consisting of polymer and crosslinker.

A catalyst for example phosphinic acid or phenylphosphinic acid, can be added during or after the preparation of the polyester. The catalyst is preferably added during the preparation of the powder paint.

If desired, the usual additives such as for instance pigments, fillers, degassing agents, flow-promoting agents and stabilizers can be incorporated in the binder composition and the powder paint system.

The binder composition according to the invention can be used in compositions with pigments as well as in compositions without pigments.

In a preferred embodiment of the invention the binder composition is used in a non-pigmented powder paint system ("clearcoat").

If pigments are used, those that have no interaction with the selected catalyst are preferred. If pigments are used, organic pigments are suitable for instance, such as titanium dioxide, zinc sulphide, iron oxide and chromium oxide, as well as organic pigments, such as for instance azo compounds.

Suitable fillers include for instance metal oxides, silicates, carbonates and sulphates.

Examples of degassing agents are benzoin and cyclohexane dimethanol bisbenzoate. The range of flow-promoting agents includes for instance polyalkyl acrylates, fluorocarbons and silicon oils. Other suitable additives are for instance additives for improvement of the triboelectric chargeability, such as sterically hindered tertiary amines which are described in EP-B-371528.

Powder paints according to the invention may be applied in the customary manner, for instance by electrostatic spraying of the powder onto an earthed substrate and by curing the paint by exposing it to heat at a suitable temperature and for a sufficiently long time. The applied powder can be heated ,for instance, in a gas oven or in an electric oven or by means of infrared irradiation.

Thermosetting coatings based on powder paint compositions for industrial applications are further described in a general sense in Powder Coatings, Chemistry and Technology, Misev, pp. 141-173 (1991).

Compositions according to the present invention may be applied in powder paint compositions for use on, for instance, metal, wood and plastic substrates. Examples are industrial coatings, coatings for machines and tools, domestic applications and component parts of buildings. The coatings are further suitable for use in the automotive industry for coating of parts and accessories.

The systems according to the invention may also be used for instance in other technical fields of the coating industry, in toner compositions, in printing ink applications and in the technical field of adhesives applications.

The invention will now be elucidated by means of the following non-restrictive examples.

### Experiment 1.

### PREPARATION OF A COMPOUND CONTAINING HYDROXYALKYL AMIDE UNITS

589 g diisopropanol amine was introduced into a double-walled glass reactor, heatable with heating oil, provided with a mechanical stirrer, a destillation head and nitrogen supply and vacuum connections. With stirring the diisopropanolamine was gradually heated to approx. 130°C. At this point 468 g of solid phthalic anhydride flakes was dosed into the reactor at such speed that the reactor temperature did not exceed 150°C (reaction is highly exothermic). After addition of all the phthalic anhydride the reactor temperature was fixed on 150°C. After 2 hours vacuum was applied. The pressure in the reactor was adapted to the release of reaction water, so that this could removed out of the reactor by destillation. After a total reaction time of 5 hours the viscous polymer contained less than 0.2 meq /g carboxylic acid (determined titrimetrically) and it was not possible any more to distill off water. After cooling the polymer was obtained. The hydroxyl groups content was found titrimetrically to be 6.1 meq/g. The number average molecular mass was determined by means of GPC (universal calibration) to be 900 g/mol and the weight average molecular mass was 1500 g/mol.

### Example I and Comparative Example A

### POWDER PAINT COMPOSITION

The powder paint compositions according to Table 1 were prepared by mixing and extrusion (PRISM extruder, 110°C). The polyester (Uralac P 5127™ from DSM Coating Resins) comprises units of terephthalic acid, adipic acid, neopentyl glycol, ethylene glycol and trimellitic anhydride.

Composition I contains a combination of 4,4-di-cumyl-di-phenyl-amine (Naugard 445™) and bis-(2,6-di-tbutyl-4-methyl-phenyl)-pentaerythritol-di-phosphite (Mark PEP 36™) whereas composition A does not contain any antioxidant;

The compositions were in the usual manner ground, sieved and electrostatically sprayed (Corona) onto 2 aluminium test panels. The panels were cured during 10 minutes at 200°C in an electrical heated circulation oven and tested on colour (b^{*}, Dr. Lange). After this cure cycle one panel was exposed to an additional heating cycle of 60 minutes at 220°C and the other panel to an additional heating cycle of 10 minutes at 240°C. After this extra cure cycle both panels were also tested on colour. The test results are shown in Table 1.

These examples show that the use of a combination of an aromatic amine and a phosphite results in a coating with improved overbake properties whereas the other properties remain good.

**TABLE 1**

| | Composition A | Composition I |
|---|---|---|
| Uralac P 5127™ | 165.1 | 165.1 |
| Comp. According to Exp. 1 | 34.9 | 34.9 |
| Naugard 445™ | | 2.7 |
| Mark PEP 36™ | | 1.3 |
| Kronos 2310™ | 100.0 | 100.0 |
| Resiflow PV5™ | 3.0 | 3.0 |
| Benzoin | 0.3 | 0.3 |
| Dr. Lange colour b*; 10' 200°C ¹⁾ | 2.0 | 0.9 |
| Dr. Lange colour b*; 10' 200°C + 60' 220°C ¹⁾ | 7.7 | 2.3 |
| Dr. Lange colour b*; 10' 200°C + 10' 240°C ¹⁾ | 4.6 | 1.5 |
| Impact resistance ²⁾ | > 160 | > 160 |
| Ericksen Slow Penetration ³⁾ | > 8 mm | > 8 mm |
| Cross-hatch adhesion ⁴⁾ | Gt 0 | Gt 0 |
| Gel time ⁵⁾ | 93 sec | 93 sec |
| Flow behaviour | good | good |
| blister limit | 130 µm | 130 µm |

| | | |
|---|---|---|
| ¹⁾ ASTM-D-2244 | | |
| ²⁾ ASTM-D-2794 | | |
| ³⁾ ISO 1520, DIN 53156 | | |
| ⁴⁾ ISO 2409, DIN 5315 | | |
| ⁵⁾ DIN 55990 | | |

## Claims

1. A powder paint binder composition containing a compound comprising carboxylic acid units and a compound comprising hydroxyalkyl amide units **characterized in that** the composition comprises an aromatic amine and a phosphite.

2. A composition according to Claim 1, **characterized in that** the amine is 4,4-di-cumyl-di-phenyl-amine.

3. A composition according to any one of Claims 1-2, **characterised in that** the compound comprising carboxylic acid units is a polyester

4. A composition according to any one of Claims 1-3 **characterised in that** the compound comprising hydroxyalkyl amide units is a condensation polymer having a number average molecular mass of between 600 and 10000 and a hydroxyalkylamide functionality of between 2 and 250.

5. A composition according to any one of Claims 1-3 **characterised in that** the compound comprising hydroxyalkyl amide units is a compound according to formula (II) or (III): 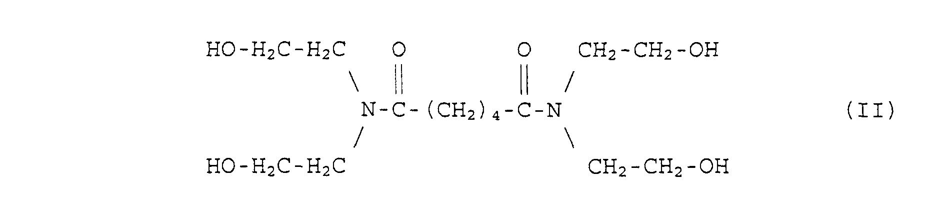 and

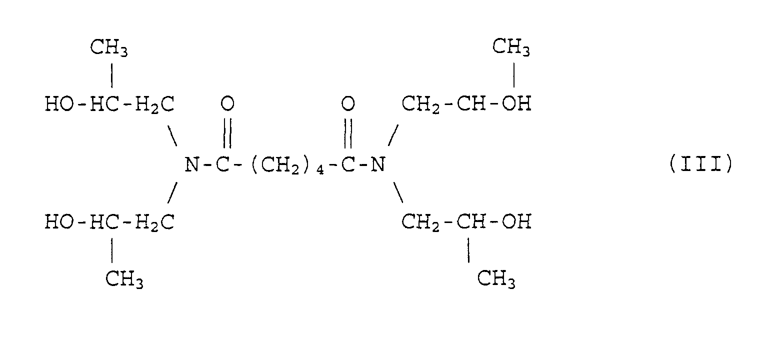

6. A composition according to any one of Claims 1-3 **characterised in that** the compound comprising hydroxyalkyl amide units is a condensation polymer having at least one carboxylic acid endgroup connected to an alkylamide group via an ester linkage.

7. A composition according to any one of Claims 1-3 **characterised in that** the compound comprising hydroxyalkyl amide units is a compound comprising hydroxyalkyl amide units and carboxylic acid units and having a weight average molecular weight less than 800 which is obtained by a process in which in a first step a compound comprising hydroxyalkyl amide units and carboxylic acid units is obtained by reacting a cyclic anhydride and an alkanolamine in a mixing device and that in a second step the binder composition is obtained by mixing said compound and a polymer in a second mixing device.

8. A powder paint composition comprising a binder composition according to any one of Claims 1-7.

9. A powder coating obtained by curing a powder paint composition according to Claim 8.

10. Wholly or partly coated substrate, **characterized in that** the coating applied is a powder coating according to Claim 9.

11. A polyester comprising an aromatic amine and a phosphite.
